# EUROPEAN PATENT SPECIFICATION

(11) **EP 0 571 392 B1**
(45) Date of publication and mention of the grant of the patent: **06.03.1996**
(21) Application number: 92900455.4
(22) Date of filing: 20.12.1991
(51) Int. Cl.: B60P 3/14, B60R 11/06

(54) **SHELF SYSTEM FOR USE IN DELIVERY VANS**
REGALANLAGE FÜR LIEFERWAGEN
SYSTEME D'ETAGERES POUR CAMIONNETTE DE LIVRAISON

(30) Priority: 07.01.1991 FI 910068; 08.05.1991 FI 912239
(43) Date of publication of application: 01.12.1993
(73) Proprietor: POHJOLAN KULJETUSKALUSTE OY, SF-04250 Kerava (FI)
(72) Inventor: PIKKARAINEN, Reino, Tapani, SF-02320 Espoo (FI); HEINÄNEN, Jouko, Erik, SF-07750 Isnäs (FI)
(74) Representative: Solf, Alexander, Dr.
(86) International application number: FI9100405
(87) International publication number: WO9212026

(56) References cited:
- EP-A- 0 302 555
- FR-A- 2 620 665
- GB-A- 2 166 091
- US-A- 4 247 144

## Description

The present invention concerns a shelf system for use in delivery vans and equivalent goods transporting vehicles, as defined in the preamble of Claim 1.

Such a shelf system is known from FR-A-2 620 665 comprising vertically arranged legs extending along a straight line from a floor to a roof of a load space of a delivery van.

This shelf system consists of at least four vertically arranged legs wherein at least two legs are arranged beside each side wall of the van, respectively. Connecting studs extend between the two side walls and each stud connects two vertically arranged legs at their upper ends. The two legs and the stud form a stiff frame in the form of a "U" being turned around.

Between the two frames shelves are introduced being arranged adjacent to the side walls. Each shelf comprises two vertical side walls and a horizontal base wall connecting the side walls. The other sides of the side walls have a vertical groove in which the vertical legs are rested for holding the shelves in a vertical position; thus goods or small cupboards can be placed and fixed to the shelves.

It is present practice in enclosed delivery vans to use, in the first place, conventional straight sets of shelves standing on four legs, said legs being secured to the floor of the load space and, possibly, to the walls or roof. Since the walls of delivery vans always are somewhat round in shape, at least in the top portion, it becomes necessary to install the shelves at a relatively great distance from the walls, and consequently they use up space.

The object of the invention is to eliminate the drawbacks mentioned in the foregoing. It is particularly an object of the invention, to disclose a novel shelf system which is individually adaptable to and fixable in any kind of enclosed delivery van to constitute a sturdy entity with low space requirements.

Regarding the features which characterize the invention, reference is made to the characterizing part of claim 1.

The shelf system of the invention, i.e., one shelf unit according to the invention, comprises advantageously only two legs, advantageously adjustable in length, secured by their lower ends to the load space, to its floor, and on the top ends of said legs fixing rods, advantageously pivoted to be turnable, for securing the top ends to the body shell in the upper part of the load space, and on the shelf boards and on the legs, fixing members mating with each other, for securing the shelf boards between said legs, adjustably in the depth direction.

The shelf system of the invention affords a number of advantages over the state of art. The legs, adjustable as to their length, can be adjusted to have the correct length for every make of delivery van, and they can be secured by their lower ends to the floor of the load space and by their upper ends, with the aid of the pivoted fixing rods, to the body box elements of the upper parts of the load space, which are positioned at somewhat different locations in different car models. One of the advantages is also the use of only two legs, which are secured to the floor of the load space in front of the wheel housing and behind it so that they will not detract from the floor area of the load space which is left between the wheel housings. Another advantage is the adjustable fixing of the shelf boards. This means that each shelf board can be individually installed between the legs, to be positioned at such depth as is afforded by the wall configuration of the load space. In this way each shelf board can be mounted as far on the side as circumstances allow and so as to use up a minimum of space. It is furthermore possible in the system to use shelves of different dimension in depth, whereby the forward margins of the shelf boards may line up if this should be desired. Moreover, the length and breadth of the shelf boards, and their number as well as the height of the legs are easy to alter and to adjust, to fit any particular application.

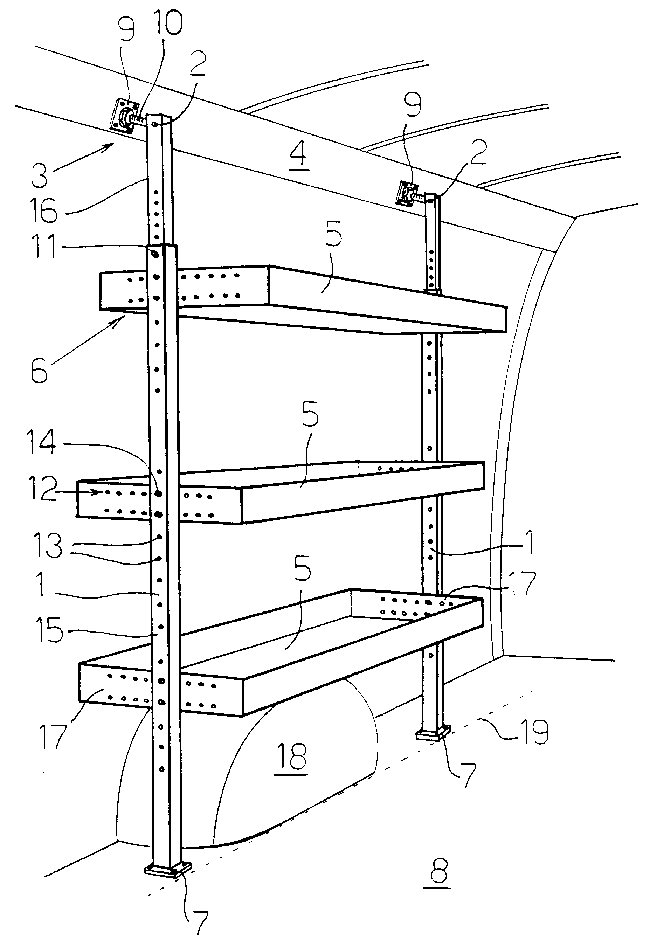

The other advantages, and additional embodiments, of the invention will be understood from the disclosure following below, in which reference is made to the attached drawing, presenting a shelf construction according to the invention, installed in the load space of a delivery van.

The shelf system according to the invention depicted in the drawing comprises two legs 1 with rectangular cross section and the length of which is telescopically adjustable. The legs comprise a lower part 15, secured to the floor 8 of the load space with the aid of a fixing flange 7, and an upper part 16, moving telescopically within the lower part and lockable with the aid of a locking pin 11 to give the desired length.

On the end of the upper part 16 a fixing rod 3 is provided, having a transversal pivot 2 joining the bracing pin turnably to the upper part 16, and on the other end of the bracing pin a fixing plate 9 which can be affixed, e.g. by screwing, to the body box element 4 of the load space. The bracing pin 10 is further provided with threads, by the aid of which its length can be adjusted by rotating it relative to the pivot 2 or to the fixing plate 9. It is hereby always possible, regardless of the height of the load space and of the curvature of its walls, and of the location of the box element, to mount the legs in position in the load space with a certain spacing.

Both legs 1 comprise, substantially over their entire length, a plurality of fixing holes 13, in which the shelf boards 5 are secured, as follows. The shelf boards carry on both ends, end pieces 17 with a certain height and provided with two horizontal rows of holes 12. The fixing holes 13 in the legs 1 are spaced by a distance equivalent to the spacing of the rows of holes. The shelf boars 5 can therefore be fixed, and locked in place, to the legs 1 at desired heights by means of locking pins 14. Sine each shelf board 5 is secured to the legs 1, at both ends, with two locking pins 14, one above the other, the shelf board will be held rigidly in place between the legs 1. Since the end pieces of the shelf boards are provided with rows 12 of holes extending substantially over the entire breadth of the end, the position of the shelves in the depth direction between the legs can be adjusted in each instance so as to make the shelf substantially to abut against the wall of the load space and, thus, to consume a minimum of space in the centre of the load space.

Since the legs 1 are carried on the floor 8 with the aid of fixing flanges 7 so that the legs merely rest upon these flanges, the shelf as a whole can be removed, and remounted, simply by unfastening, respectively refastening, the pivot pins 2 on the upper parts 16. It is thus understood that when the shelves have been taken out of the car, the only components which remain fixed in the car are the fixing flanges 7 and the fixing plates 9 with pins 10.

As has been shown in the figure, the walls of the load space usually curve inward on top, whereby it will be necessary to mount the topmost shelf, at least, out of line with the lower shelves. It should also be noted, concerning the mounting of the legs 1, that the point where they are secured, on the floor 8, lies behind the line 19 defined by the forward margin of the wheel housing 18, whereby the legs will not detract from the width of the transport passage between the wheel housings.

In the foregoing the invention has been described by way of example with the aid of the drawings attached, while various embodiments of the invention can be contemplated within the scope of the inventive idea defined by the claims.

## Claims

1. A shelf system for use in delivery vans, comprising
- legs braced vertically in the load space,
- shelf boards carried by said legs,
- legs (1) which are secured by their lower ends to the floor (8) of the load space,
- on the upper ends of said legs, fixing rods (3) for securing said upper ends to a body box element (4) of the load space, and
- on the shelf boards (5) and on the legs, mating fixing elements (6) for fixing the shelf boards between the legs,
characterized in that
the shelf system comprises only two legs (1) and the fixing elements (6) are adjustable in the depth direction of the shelf.

2. Shelf system according to claim 1, **characterized** in that the legs (1) are adjustable in length.

3. Shelf system according to claim 1, **characterized** in that the fixing rods (3) connect turnably with the upper ends of the legs (1) by means of pivots (2).

4. Shelf system according to any one of claims 1-3, **characterized** in that on the lower end of the legs (1) belong fixing flanges (7), with which the legs are secured to the floor (8) of the load space.

5. Shelf system according to any one of claims 1-4, **characterized** in that the fixing rod (3) consists of a fixing plate (9) and a bracing pin (10) braced thereagainst and turnable on a pivot (2).

6. Shelf system according to claim 5, **characterized** in that the bracing pin (10) is adjustable of its length.

7. Shelf system according to any one of claims 1-6, **characterized** in that the legs (1) are telescopically adjustable in length and lockable to desired length by means of locking pins (11) pushed through them.

8. Shelf system according to any one of claims 1-7, **characterized** in that the fixing elements (6) comprise, on the ends of the shelf boards (5), horizontal rows of holes (12) and on the legs (1), corresponding fixing holes (13) with locking pins (14).

## Patentansprüche

1. Regalsystem zur Verwendung in Lieferwägen, mit
- im Laderaum verankerten Ständern,
- Fachböden, welche durch die Ständer getragen sind,
- Ständern (1), die durch ihre unteren Enden am Boden (8) des Laderaums befestigt sind,
- Befestigungsstäben (3) an den oberen Enden der Ständer zum Befestigen der oberen Enden an einem Karosseriekastenelement (4) des Laderaums, und
- gepaarte Befestigungselemente (6) an den Fachböden (5) und an den Ständern zum Befestigen der Fachböden zwischen den Ständern,
dadurch gekennzeichnet, daß
das Regalsystem lediglich zwei Ständer (1) umfaßt, und die Befestigungselemente (6) in der Tiefenrichtung des Regals einstellbar sind.

2. Regalsystem nach Anspruch 1,
dadurch gekennzeichnet, daß die Ständer (1) bezüglich ihrer Länge einstellbar sind.

3. Regalsystem nach Anspruch 1,
dadurch gekennzeichnet, daß die Befestigungsstäbe (3) mittels Gelenken (2) mit den oberen Enden der Ständer (1) drehbar verbunden sind.

4. Regalsystem nach einem der Ansprüche 1 bis 3,
dadurch gekennzeichnet, daß an den unteren Enden der Ständer (1) Befestigungsflansche (7) vorgesehen sind, mit welchen die Ständer am Boden (8) des Laderaums befestigt sind.

5. Regalsystem nach einem der Ansprüche 1 bis 4,
dadurch gekennzeichnet, daß der Befestigungsstab (3) aus einer Befestigungsplatte (9) und einem Verankerungsstift (10) besteht, der an der Platte verankert und am Gelenk (2) drehbar ist.

6. Regalsystem nach Anspruch 5,
dadurch gekennzeichnet, daß der Verankerungsstift (10) bezüglich seiner Länge einstellbar ist.

7. Regalsystem nach einem der Ansprüche 1 bis 6,
dadurch gekennzeichnet, daß die Ständer (1) bezüglich ihrer Länge teleskopisch einstellbar und hinsichtlich der gewünschten Länge mittels Verriegelungsstiften (11) verriegelbar sind, welche durch sie hindurch gesteckt werden.

8. Regalsystem nach einem der Ansprüche 1 bis 7,
dadurch gekennzeichnet, daß die Befestigungselemente (6) an den Enden der Fachböden (5) horizontale Lochreihen (12) und an den Ständern (1) entsprechende Befestigungslöcher (13) mit Verriegelungsstiften (14) umfassen.

## Revendications

1. Système de rayonnage pour camionnettes de livraison, comprenant
- des montants ancrés dans le compartiment de chargement,
- des planches de rayonnage supportées par lesdits montants,
- des montants (1) étant fixés par leurs extrémités inférieures au plancher (8) du compartiment de chargement,
- des attaches (3) étant prévues aux extrémités supérieures desdits montants pour fixer lesdites extrémités supérieures à un élément en caisson (4) de la carrosserie du compartiment de chargement, et
- des éléments de fixation appariables (6) étant prévus sur les planches de rayonnage (5) et les montants pour fixer les planches de rayonnage entre les montants,
caractérisé en ce que le système de rayonnage ne comprend que deux montants (1) et en ce que les éléments de fixation (6) sont réglables dans la direction de la profondeur du rayonnage.

2. Système de rayonnage selon la revendication 1, caractérisé en ce que les montants (1) sont réglables en longueur.

3. Système de rayonnage selon la revendication 1, caractérisé en ce que les attaches (3) sont jointes à rotation aux extrémités supérieures des montants (1) au moyen de pivots (2).

4. Système de rayonnage selon l'une quelconque des revendications 1 à 3, caractérisé en ce qu'il est prévu, aux extrémités inférieures des montants (1), des collerettes de fixation (7) par lesquelles les montants sont fixés au plancher (8) du compartiment de chargement.

5. Système de rayonnage selon l'une quelconque des revendications 1 à 4, caractérisé en ce que l'attache (3) se compose d'une plaque de fixation (9) et d'une tige d'entretoisement (10) qui est fixée à celle-ci par serrage et peut tourner autour d'un pivot (2).

6. Système de rayonnage selon la revendication 5, caractérisé en ce que la tige d'entretoisement (10) est réglable en longueur.

7. Système de rayonnage selon l'une quelconque des revendications 1 à 6, caractérisé en ce que les montants (1) sont réglables télescopiquement en longueur et peuvent être verrouillés à la longueur voulue au moyen de goujons de blocage (11) insérés à travers eux.

8. Système de rayonnage selon l'une quelconque des revendications 1 à 7, caractérisé en ce que les éléments de fixation (6) comprennent, aux extrémités des planches de rayonnage (5), des rangées horizontales de trous (12) et, sur les montants (1), des trous de fixation correspondants (13), avec des goujons de blocage (14).
